# EUROPEAN PATENT APPLICATION

(11) **EP 1 315 111 A2**
(43) Date of publication of application: **28.05.2003**
(21) Application number: 02025862.0
(22) Date of filing: 19.11.2002
(51) Int. Cl.: G06F 17/60

(54) **Service system, terminal, service server, and computer program for electronic commerce**

(30) Priority: 20.11.2001 JP 2001354803; 08.11.2002 JP 2002325783
(71) Applicant: MATSUSHITA ELECTRIC INDUSTRIAL CO., LTD, Kadoma-shi, Osaka 571-0000 (JP)
(72) Inventor: Morioka, Mikio, Tokyo 144-0046 (JP); Uranaka, Sachiko, Tokyo 113-0021 (JP); Kageyama, Mitsuhiro, Tachikawa-shi, Tokyo 190-0032 (JP); Sato, Mitsuhiro, Atsugi-shi, Kanagawa 243-0216 (JP)
(74) Representative: Casalonga, Axel

(57) **Abstract**

An EC terminal 20 comprises personal information storing means 22 for storing personal information containing user's shopping history, personal information disclosing means 21 for disclosing personal information based on a request from a server 10, and terminal ID disclosing means 23 for disclosing a terminal ID to the server. The server comprises a personal information database 14 for managing personal information of a user, to whom EC services have been provided in the past, personal information requesting means 11 for requesting an EC terminal to disclose user's personal information, and response content deciding means 13 for deciding a response content based on the disclosed personal information and the content of the personal information database. The user stores personal information in the EC terminal, and supplies personal information in all EC services to receive satisfactory services even at a store which he visits for the first time. An EC service provider can effectively collect personal information. Thus, a customer can receive better services, and the EC service provider can produce better results of sales promotion.

## Description

### BACKGROUND OF THE INVENTION

### FIELD OF THE INVENTION

The present invention relates to an electronic commerce service system, an electronic commerce terminal, an electronic service server, and a computer program, which are designed to promote electronic commerce (referred to EC, hereinafter), more specifically to effectively use information regarding personal shopping history or the like, and information regarding a terminal used by a user.

### DESCRIPTION OF THE RELATED ART

In recent years, because of the development of Internet, and the improvement of an environment of EC carried out through a network, the EC has become widespread as one of normal commerce means, and is now widely used when individuals buy goods, tickets, music contents and the like. In the future, it is expected that the use of EC will become more popular.

In a conventional EC system, as described in Patent Document 1 below or the like, each service provider asks a customer who registers for membership to write in a name, a sex, an address, a telephone number, a mail address and the like on a membership registration screen, and stores and manages such personal identification information, and shopping history information regarding goods or the like bought by the customer through EC services in a customer information database. In the EC services, a service is provided to store points in accordance with customer's purchased amount, and take the stored amount of points off a price of goods. The customer information database is also used for management of such an additional service. Thus, each service provider holds a large customer information database, and utilizes data collected in the database to find goods to be sold well, and customer's preference by a method such as data mining.

In addition, for example, as described in Patent Document 2 below, there has been known a technology for referring to user's commerce history, and providing goods information suited to user's preference in accordance with this commerce history.

### Patent Document 1

Japanese Patent Application Laid-Open No. 2001-243376 (Paragraphs 0044, 0045, FIG. 5)

### Patent Document 2

Japanese Patent Application Laid-Open No. 2001-22831 (FIG. 1, FIGS. 6 to 10)

The customer can use such EC services in combination to receive much more additional services. In addition to the price discount, there are various types of additional services, such as supplying of special information, free supplying of pay information, and a favorable method of payment. The service provider provides such additional services to promote sale of goods or the like.

Furthermore, as means for the EC service provider to expand a market, there is a method of selling goods specially set at low prices to nonmembers. This method is adopted to dig up potential customers, and fence them in as new customers.

However, since the services provided by the conventional EC system to the members or the like enable the customer to receive various additional services only when he frequently uses specific EC services to become a "familiar face", the customer cannot receive additional services when using other EC services. Consequently, there is dissatisfaction with the need to accumulate buying achievements from all over again.

On the other hand, since the service provider collects customer information independently, there is a limit to information to be collected. Therefore, it is practically difficult to collect information regarding, for example, what services the customer receives from other EC services, what goods he buys, or the like.

Furthermore, the selling of low-priced goods that the EC service provider carries out to dig up potential customers targets many unspecified buyers. Consequently, compared with sales promotion behavior conducted by clearly focusing on new targets to be fenced in, a sufficient cost effective result cannot be obtained. In this case, many providers regulate buying of the members by adding a statement that "Please refrain from buying if you are our customer". Even so, it is difficult to prevent the behavior of the member to borrow friend's or family member's name to buy low-priced goods, which reduces the effect of market expansion. As a result, a user who is an original target may lose a chance to buy low-priced goods. In addition, in such an EC service system, no satisfactory services suited to a use environment of each user (e.g., various settings and functions related to a terminal used by the user) have been provided.

The present invention is designed to solve the foregoing conventional problems, and objects of the invention are to provide an electronic commerce service system, an electronic commerce terminal, an electronic commerce service server and a computer program, which enable a customer to receive better services, and an EC service provider to produce better results of sales promotion.

### SUMMARY OF THE INVENTION

In an EC service system according to claim 1, an EC terminal comprises personal information storing means for storing personal information containing user's shopping history, and personal information disclosing means for disclosing the personal information based on a request of an EC service server, and the EC service server comprises a personal information database for managing personal information of a user, to whom EC services have been provided in the past, personal information requesting means for requesting the EC terminal to disclose the personal information of the user, and response content deciding means for deciding a response content based on the disclosed personal information, and a content of the personal information database.

Thus, the user of the EC services stores the personal information in the EC terminal, and supplies his own information (e.g., personal information intrinsic to each member such as shopping history) in all the EC services, whereby the user can receive satisfactory services even at a store which he visits for the first time. Moreover, a service provider can effectively collect personal information, and prevent useless investments in digging-up of potential customers.

In the EC service system of claim 2 which depends on claim 1, the personal information disclosing means of the EC terminal also discloses personal information of the other user different from the user in that he is unrelated to use of the EC services to the service server, and the response content deciding means of the service server decides the response content based on only a content of the personal information disclosed by the EC terminal if no entry of a user corresponding to the personal information disclosed by the EC terminal is present in the personal information database.

Thus, the user of the EC services can receive services corresponding to the personal information of the other user using the same terminal, and the service provider can obtain the personal information of the user different from the service receiving user.

In the EC service system of claim 3 which depends on claim 1, the EC terminal comprises terminal ID storing means for storing a terminal ID intrinsic to a terminal, and terminal ID disclosing means for disclosing the terminal ID based on a request of the service server, the service server comprises terminal ID requesting means for requesting the EC terminal to disclose the terminal ID, and the response content deciding means decides the response content based on the personal information and the terminal ID disclosed by the EC terminal, and the content of the personal information database.

Thus, the user of the EC services can supply information specifying the used terminal to the service provider side, and the service provider side can provide services in accordance with the user of the services, and the terminal used by the user.

In the EC service system of claim 4 which depends on claim 3, the response content deciding means of the service server includes a content referring to services received by the other user in the response content if the other user who receives the EC services by using the terminal of the same terminal ID disclosed by the EC terminal is recorded in the personal information database.

Thus, the user of the EC services can receive services corresponding to the personal information of the other user using the same terminal, and the service provider can provide services in accordance with the user of the services, and the terminal used by the user.

In the EC service system of claim 5 which depends on claim 1, the personal information storing means of the EC terminal contains, in the personal information, a main terminal ID which is a terminal ID of the EC terminal mainly used by the user.

Thus, the user of the EC services can supply a main terminal ID indicating a normally used terminal as personal information to the service provider.

In the EC service system of claim 6 which depends on claim 3, the personal information storing means of the EC terminal contains, in the personal information, a main terminal ID which is a terminal ID of the EC terminal mainly used by the user.

Thus, the user of the EC services can supply a main terminal ID indicating a normally used terminal as personal information, and a terminal ID indicating a currently used terminal to the service provider.

In the EC service system of claim 7 which depends on claim 6, the response content deciding means of the service server determines whether the terminal ID disclosed by the EC terminal coincides or not with the main terminal ID contained in the personal information disclosed by the EC terminal, and decides the response content based on a result of the determination.

Thus, the service provider can grasp whether the terminal currently used by the user of the EC services is a main terminal or not.

In the EC service system of claim 8 which depends on claim 6, the response content deciding means of the service server determines whether the other user who receives the EC services by using the terminal of the same terminal ID disclosed by the EC terminal is recorded or not in the personal information database, and decides the response content based on a result of the determination.

According to this constitution, the user of the EC services can supply the main terminal ID indicating the normally used terminal as personal information and the terminal ID indicating the currently used terminal to the service provider. The service provider can grasp whether the terminal currently used by the user of the EC services has been used or not by the other user, and accordingly decide services to be provided.

In the EC service system of claim 9 which depends on claim 3, if a target of the EC services is digital data, the response content deciding means of the service server includes, in the response content, conditions for enabling reproduction of the digital data only at the terminal of the terminal ID disclosed by the EC terminal.

Thus, it is possible to limit terminals which can reproduce distributed digital data.

In an EC service system according to claim 10, an EC terminal comprises terminal ID storing means for storing a terminal ID intrinsic to a terminal, and terminal ID disclosing means for disclosing the terminal ID based on a request of an EC service server, and the EC service server comprises terminal ID requesting means for requesting the EC terminal to disclose the terminal ID, a terminal ID database for storing a terminal ID table, in which information regarding the terminal ID is described, and response content deciding means for deciding a response content to the EC terminal based on the terminal ID disclosed by the EC terminal, and a content of the terminal ID database.

Thus, the user of the EC services supplies his own information (e.g., information regarding a terminal used by the member) in all the EC services, whereby the user can receive satisfactory services even at a store which he visits for the first time, and services most suited to the used terminal. The service provider can always provide optimal services satisfactory to the members in accordance with a terminal used by each member.

In the EC service system of claim 11 which depends on claim 10, the service server comprises a personal information database for managing personal information of a user who has received the EC services in the past, and personal information requesting means for requesting the EC terminal to disclose the personal information of the user, and the response content deciding means decides the response content based on the personal information and the terminal ID disclosed by the EC terminal, a content of the personal information database, and a content of the terminal ID database.

Thus, the user of the EC services supplies his own information (e.g., information regarding the terminal used by the member, and personal information intrinsic to each member such as shopping history) in all the EC services, whereby the user can receive satisfactory services even at a store which he visits for the first time, and services most suited to the used terminal. The service provider can determine whether the terminal currently used by the user of the EC services is a normally used terminal or not and, for example, at a terminal possibly used by a plurality of users such as a television used by a family, the service provider can differentiate it from the terminal normally used by the user to limit services to a user who is not a normal user.

In the EC service system of claim 12 which depends on claim 10 or 11, the response content deciding means of the EC service server distinguishes whether the terminal ID obtained through the terminal ID requesting means is included or not in the terminal ID table, and limits the services to the EC terminal if the terminal ID obtained through the terminal ID requesting means is not included in the terminal ID table.

Thus, the service provider can distinguish whether the terminal currently used by the user of the EC services has been used for service utilization or not in the past, or registered or not for service utilization, and limit the content of services if the terminal has not been used in the past for service utilization, or not registered.

In the EC service system of claim 13 which depends on claim 10 or 11, the response content deciding means of the service server distinguishes whether the terminal ID obtained through the terminal ID requesting means is included or not in the terminal ID table, and increases security in authentication of the EC terminal if the terminal ID obtained through the terminal ID requesting means is not included in the terminal ID table.

Thus, the service provider can distinguish whether the terminal currently used by the user of the EC services has been used or not in the past for service utilization, or registered for service utilization, and increase a security level in authentication if the terminal has not been used in the past, or not registered.

In the EC service system of claim 14 which depends on claim 10 or 11, the terminal ID table includes the terminal ID and information indicating a type of the EC terminal, and the response content deciding means of the service server distinguishes a type of the EC terminal whose terminal ID is obtained through the terminal ID requesting means, and decides the response content in accordance with the type.

Thus, the service provider can provide services in accordance with the type of the terminal currently used by user of the EC services.

In the EC service system of claim 15 which depends on claim 10 or 11, the terminal ID table includes the terminal ID and information indicating an installation site of the EC terminal, and the response content deciding means of the service server distinguishes an installation site of the EC terminal whose terminal ID is obtained through the terminal ID requesting means, and decides the response content in accordance with the installation site.

Thus, the service provider can provide services in accordance with the installation site of the terminal currently used by the user of the EC services.

In the EC service system of claim 16 which depends on claim 10 or 11, the terminal ID table includes the terminal ID and information indicating performance of the EC terminal, and the response content deciding means of the service server distinguishes performance of the EC terminal whose terminal ID is obtained through the terminal ID requesting means, and decides the response content in accordance with the performance.

Thus, the service provider can provide services in accordance with the performance of the terminal currently used by the user of the EC services.

In the EC service system of claim 17 which depends on claim 10 or 11, the terminal ID table includes the terminal ID and information indicating a type, an installation site, and performance of the EC terminal, and the response content deciding means of the service server distinguishes a type, an installation site, and performance of the EC terminal whose terminal ID is obtained through the terminal ID requesting means, and decides the response content in accordance with a combination of the type, the installation site, and the performance.

Thus, the service provider can provide services in accordance with the combination of the type, the installation site, and the performance of the terminal currently used by the user of the EC services.

An EC terminal according to claim 18 comprises personal information storing means for storing personal information containing user's shopping history, personal information disclosing means for disclosing the personal information based on a request of the service server, terminal ID storing means for storing a terminal ID intrinsic to a terminal, and terminal ID disclosing means for disclosing the terminal ID based on a request of the service server.

Thus, a user of EC services stores the personal information in the EC terminal, and supplies his own information (e.g., personal information intrinsic to each member such as shopping history, and information specifying a terminal) in all the EC services, whereby the user can receive satisfactory services even at a store which he visits for the first time.

An EC service server according to claim 19 comprises personal information requesting means for requesting an EC terminal to disclose personal information containing user's shopping history, terminal ID requesting means for requesting the EC terminal to disclose a terminal ID, a personal information database for managing personal information of a user who has received the EC services in the past, and response content deciding means for deciding a response content to the EC terminal based on the disclosed personal information and terminal ID, and a content of the personal information database.

Thus, a service provider can effectively collect personal information, prevent useless investments in digging-up of potential customers, and provide services in accordance with the user of the services, and the terminal used by the user.

An EC service server according to claim 20 comprises terminal ID requesting means for requesting an EC terminal to disclose a terminal ID, a terminal ID database for storing a terminal ID table, in which information regarding the terminal ID is described, and response content deciding means for deciding a response content to the EC terminal based on the terminal ID disclosed by the EC terminal, and a content of the terminal ID database.

Thus, a service provider can always provide optimal services satisfactory to members in accordance with a terminal used by each member.

In a computer program according to claim 21, a computer of an EC terminal is caused to function as personal information disclosing means for disclosing personal information containing user's shopping history based on a request of an EC service server, and terminal ID disclosing means for disclosing a terminal ID intrinsic to a terminal based on a request of the EC service server.

Thus, a user of EC services supplies his own information (e.g., personal information intrinsic to each member such as shopping history, and information regarding a used terminal) in all the EC services, whereby the user can receive satisfactory services even at a store which he visits for the first time.

In a computer program according to claim 22, a computer of an EC service server is caused to function as personal information requesting means for requesting an EC terminal to disclose personal information containing user's shopping history, terminal ID requesting means for requesting the EC terminal to disclose a terminal ID, and response content deciding means for deciding a response content to the EC terminal based on the disclosed personal information and terminal ID, and a content of a personal information database for managing personal information of a user, to whom the EC services have been provided in the past.

Thus, a service provider can effectively collect personal information, prevent useless investments in digging-up of potential customers, and provide services in accordance with a user of the services, and a terminal used by the user.

In a computer program according to claim 23, a computer is caused to function as terminal ID requesting means for requesting an EC terminal to disclose a terminal ID, a terminal ID database for storing a terminal ID table, in which information regarding the terminal ID is described, and response content deciding means for deciding a response content to the EC terminal based on the terminal ID disclosed by the EC terminal, and a content of the terminal ID database.

Thus, a service provider can always provide services satisfactory to each member in accordance with a terminal used by each member.

### BRIEF DESCRIPTION OF THE DRAWINGS

FIG. 1 is a configuration view of an EC service system according to a first embodiment of the present invention.
FIG. 2 is a data structure view of personal information in the EC service system of the first embodiment of the invention.
FIG. 3 is a data structure view of terminal ID information in the EC service system of the first embodiment of the invention.
FIG. 4 is a data structure view of personal information database stored information in the EC service system of the first embodiment of the invention.
FIG. 5 is a sequential view showing a communication process in the EC service system of the first embodiment of the invention.
FIG. 6 is a configuration view of an EC service system according to a second embodiment of the present invention.
FIG. 7 is a schematic view showing an example of a terminal ID table according to the second embodiment of the invention.
FIG. 8 is a flowchart showing a process for deciding whether or not to permit connection to a terminal device 20 in accordance with presence of a terminal ID entry in the terminal ID table in a connection service according to the second embodiment of the invention.
FIG. 9 is a schematic view illustrating a security level according to the second embodiment of the invention.
FIG. 10 is a flowchart showing a process for deciding schedule information to be supplied to the terminal device 20 in accordance with an installation site described in the terminal ID table in a schedule management service according to the second embodiment of the invention.
FIG. 11 is a flowchart showing a process for deciding a content of recommendation information to be supplied to the terminal device 20 in accordance with a type described in the terminal ID table in a recommendation information supplying service according to the second embodiment of the invention.
FIG. 12 is a flowchart showing a process for deciding a distribution mode of a moving picture to be supplied to the terminal device 20 in accordance with performance described in the terminal ID table in a moving picture distribution service according to the second embodiment of the invention.
FIG. 13 is a flowchart when each service is selectively provided in accordance with the terminal ID according to the second embodiment of the invention.
FIG. 14 is a flowchart showing a process for deciding a content of a service in accordance with an entry of a terminal ID corresponding to a member ID in a connection service according to a third embodiment of the present invention.
FIG. 15 is a schematic view showing an example of a member ID table according to the third embodiment of the invention.

### DETAILED DESCRIPTION OF ILLUSTRATIVE EMBODIMENTS

Next, illustrative embodiments of the present invention will be described with reference to the accompanying drawings.

### First Embodiment

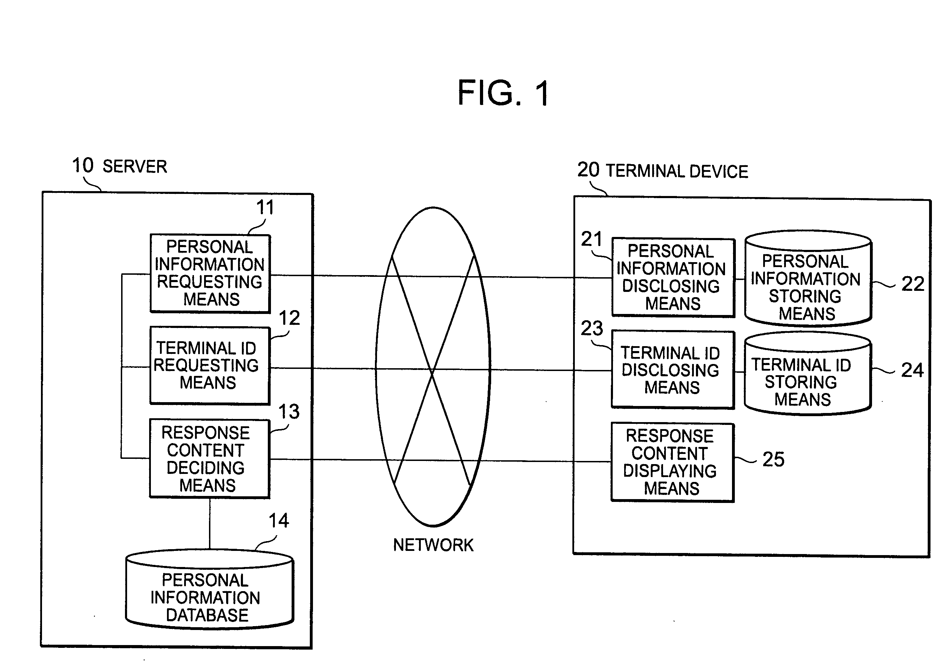

First, the first embodiment of the present invention is described. FIG. 1 is a configuration view of an EC service system according to the first embodiment of the invention. The EC service system of the first embodiment of the invention comprises, as shown in FIG. 1, a terminal device (electronic commerce terminal) 20 used by a user to carry out EC, and an EC service server (may be simply referred to as a server) 10 for providing EC services. The terminal device 20 communicates with the server 10 through a network such as Internet to receive EC services.

The terminal device 20 comprises personal information storing means 22 for storing personal information such as user's hobby or shopping history, personal information disclosing means 21 for disclosing necessary personal information to the server 10, terminal ID storing means 24 for storing information regarding a terminal ID or a user, terminal ID disclosing means 23 for disclosing the terminal ID information stored in the terminal ID storing means 24 to the server 10 when necessary, and response content displaying means 25 for displaying a response content decided by the server 10. The EC service server 10 comprises personal information requesting means 11 for requesting personal information to the terminal device 20 to be accessed, terminal ID requesting means 12 for requesting terminal ID information to the terminal device 20, response content deciding means 13 for deciding a response to the accessed terminal device, and a personal information database 14 for storing member's personal information.

The functions of the personal information disclosing means 21 and the terminal ID disclosing means 23 of the terminal device 20 are realized by execution of processing defined in a program by a computer incorporated in the terminal device 20. The functions of the personal information requesting means 11, the terminal ID requesting means 12, and the response content deciding means 13 of the server 10 are realized by execution of processing defined in a program by a computer incorporated in the server 10.

The terminal device 20 is a personal computer, a set top box (STB) or the like connected to a television in order to use two-way services through a communication line such as CATV, Internet, or digital broadcasting.

The personal information storing means 22 is a storage device incorporated in the terminal device 20, such as a portable medium, e.g., an IC card, or a hard disk.

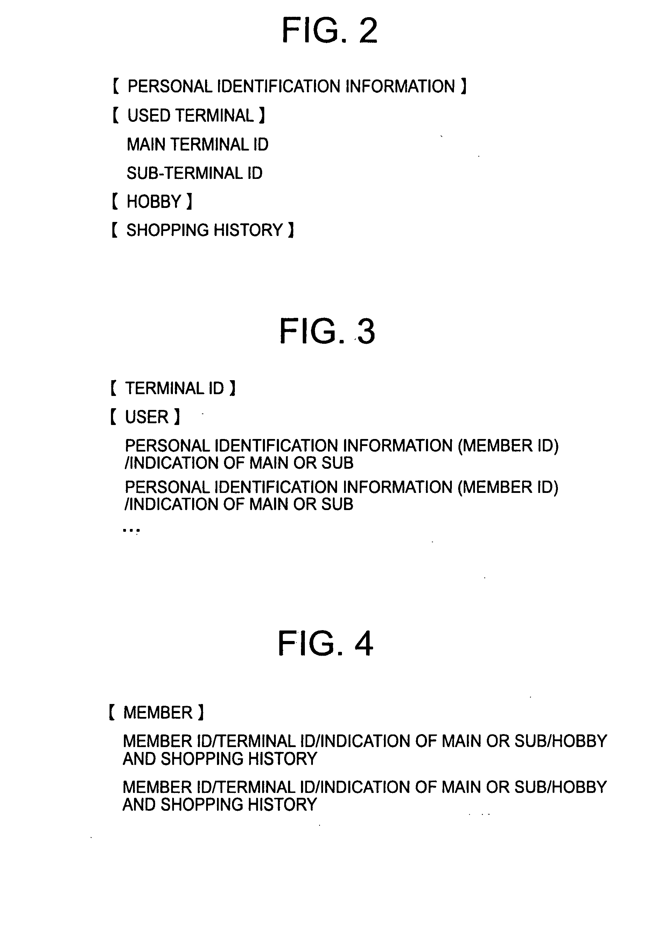

As shown in FIG. 2, the personal information storing means 22 stores, as personal information, personal identification information constituted of user's name, sex, address, telephone number, mail address, member ID when registration is made for membership, and the like, used terminal information constituted of a terminal ID of a main terminal mainly used by the user, and a terminal ID of a sub-terminal used in an auxiliary manner by the user, information indicating user's hobby, and user's shopping history information of goods bought through various EC services.

The terminal ID storing means 24 is a storage device such as a hard disk incorporated in the terminal device 20, which stores, as shown in FIG. 3, a terminal ID as terminal ID information, and information indicating whether the terminal device 20 used by each user is a normally used main terminal, or a sub-terminal used in an auxiliary manner.

The personal information database 14 of the EC service server 10 stores, as shown in FIG. 4, a member ID of each member, a terminal ID of each terminal device used as a main terminal or a sub-terminal by the member, indication of the main terminal or the sub-terminal, and member's hobby and shopping history.

Now, description is made of a communication process when the user loads the personal information storing means 22 constituted of a portable medium on the terminal device 20, and accesses the EC service server 10 from this terminal device 20

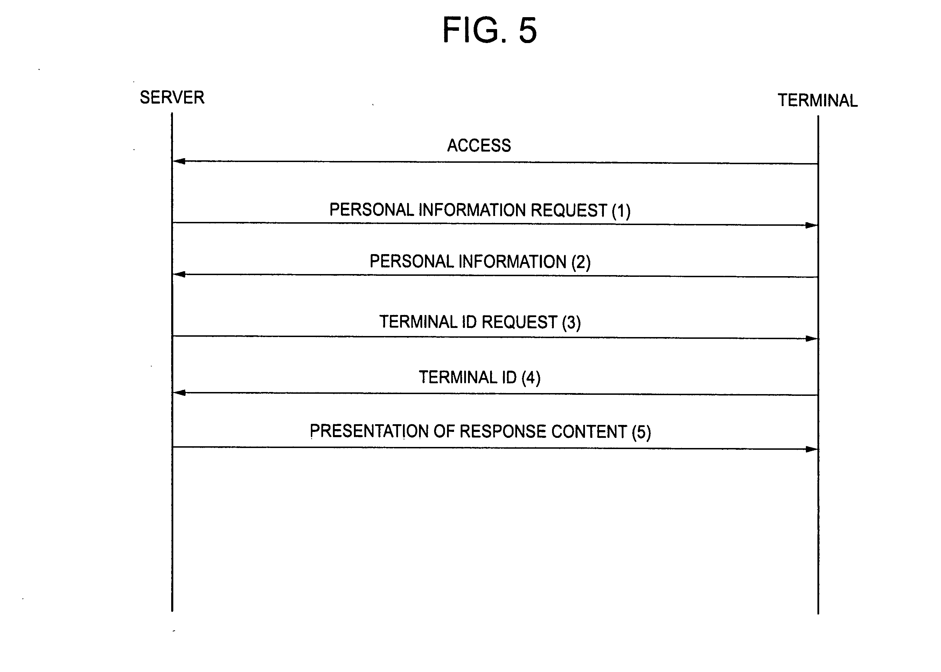

FIG. 5 shows a sequence of the process. When the terminal device 20 accesses the EC service server 10, the personal information requesting means 11 of the server 10 requests the terminal device 20 to disclose personal information (1). The personal information disclosing means 21 of the terminal device 20 negotiates with the personal information requesting means 11 to supply necessary one among bits of personal information stored in the personal information storing means 22 to the EC service server 10 (2). For example, if it is necessary for the user to register for membership of EC services, personal identification information such as user's name, sex, address, telephone number or mail address, his main terminal ID and sub-terminal ID, and his hobby and shopping history is notified. If the user is a member of the EC services, only his member ID is notified.

Then, the terminal ID requesting means 12 of the server 10 requests the terminal device 20 to disclose terminal ID information (3). The terminal ID disclosing means 23 of the terminal device 20 notifies, among bits of terminal ID information stored in the terminal ID storing means 24, a terminal ID and information indicating at which of the main and sub terminals the user uses the terminal device 20 to the terminal ID requesting means 12 (4).

The response content deciding means 13 of the server 10 refers to the personal information obtained through the personal information requesting means 11, the terminal ID information obtained through the terminal ID requesting means 12, and the personal information of the user stored in the personal information database 14 to decide a response to the terminal device 20 which has requested access.

For example, the server 10 can make the following responses.
(a) The server 10 refuses to provide services when there is no entry of a user to be identified from the personal identification information of the personal information in the personal information database 14 (user is a nonmember), and a terminal ID contained in the terminal ID information coincides with a terminal ID of the other member.
(b) The sever 10 refuses to provide services when there is an entry of a user to be identified from the personal identification information of the personal information in the personal information database 14 (user is a member), and neither of a main terminal ID and a sub-terminal ID of the member stored in the personal information database 14 coincides with a terminal ID contained in the terminal ID information.
(c) If the user is a nonmember, the server 10 evaluates shopping history contained in the personal information to provide additional services to the user.
(d) If presence of the other member who has received EC services by using the terminal device of the same terminal ID is found from the shopping history data of the personal information database 14, the server 10 also refers to the services received by the other member in a response to the terminal device 20, for example by a message that "Mr. (Ms.) ... is a product you bought the other day comfortable to use?"
(e) The server 10 evaluates not only the shopping history of the user who has made the access, but also shopping histories of all the members who use the terminal device of the same terminal ID as a main or sub terminal comprehensively, to decide additional services to the user. If the member uses his family member's name or ID to buy low-priced goods, the server 10 refuses to provide services.
(f) If EC target goods is a digital content, the server 10 supplies the content only when the terminal device of the terminal ID contained in the terminal ID information is used as a main terminal.

The response content deciding means 13 of the server 10 notifies the decided response content to the terminal device 20 (5), and the response content displaying means 25 displays the content.

Thereafter, a EC normal process including presentation of a list of goods to the terminal device 20, ordering of goods by the terminal device 20, and the like is carried out.

Accordingly, the server 10 makes the response (a) to prevent the behavior of the member user of loading an IC card of his friend who is a nonmember on the main terminal to buy goods set at low prices to expand a market.

The server 10 makes the response (b) to prevent the behavior of the member user of loading his own IC card on his friend's terminal device to buy goods set at low prices to expand a market.

The server 10 makes the response (c) to enable the user to receive familiar-face services even at a store which he visits for the first time. On the other hand, the EC service providing side can win over good customers having abundant EC buying achievements through such services, and collect good purchase information of customers of other EC services.

The sever 10 makes the response (d) to impress good aftersales care of EC services, and a friendly atmosphere on the user.

The server 10 makes the response (e) to collectively evaluate purchases made through EC services by members of a family as a family unit, whereby additional services can be provided.

The server 10 makes the response (f) to include conditions for preventing reproduction of a bought digital content at a terminal other than the main terminal of the member, whereby content reproduction can be limited, and it is possible to prevent the member from making his nonmember friend buy a digital content set at a low price to expand a market to watch it at home.

Thus, in the EC service system, since the personal information is held at the terminal device 20 side, the store side obtains this personal information to provide additional services to the user who visits the store for the first time based on buying achievements in other EC services. The store side introduces attractive goods to the user who visits the store for the first time based on the obtained personal information to produce better sales results. Based on the obtained personal information, the store side also sets goods for market expansion to prices to arouse user's willingness to buy, whereby potential customers can be efficiently dug up to suppress useless investments. Moreover, the obtained personal information can be used as a material for analysis to find goods expected to be sold well, and customer's preference.

When using new EC services, the user can omit time and labor to enter each personal information from a browser screen of the terminal device 20.

In the EC service system, the terminal device 20 side holds the personal information and the terminal ID information, and the store side obtains these bits of information, whereby it is possible to prevent a situation where the goods set at low prices to expand a market are sold to the fenced-in members. Moreover, the buying histories of all the family members sharing the terminal device 20 can be evaluated to provide additional services, and reference can be made to service use previously made by a family member to give friendly impression.

The explanation has been made mainly based on the case where the personal information storing means 22 is a portable medium. However, the personal information storing means 22 may be a storage device incorporated in the terminal device 20. In this case, the personal information storing means 22 stores personal information of a user who uses the terminal device 20 as a main terminal.

The explanation has also been made based on the example where when the user is a nonmember, buying history in other EC services is disclosed in the server. However, when the user is a member, buying history in other EC services may also be disclosed in the server, and the server may consider buying achievements in the other EC services to decide additional services to the member.

The explanation has been made based on the example where the user preregisters user information in the EC service server 10 to use EC services. However, the present invention can be applied to other EC service systems.

### Second Embodiment

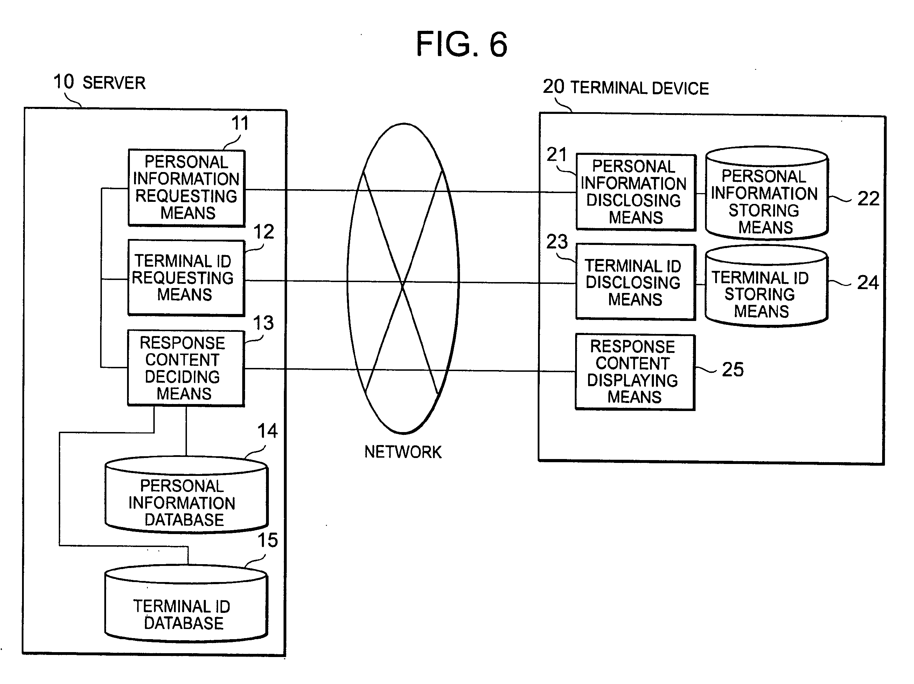

Next, the second embodiment of the present invention is described. FIG. 6 is a configuration view of an EC service system according to the second embodiment of the invention. As in the case of the first embodiment, the EC service system of the second embodiment of the invention comprises, as shown in FIG. 6, a terminal device 20 used by a user to carry out EC, and an EC service server 10 for providing EC services. The terminal device 20 communicates with the EC service server 10 through a network such as Internet to receive EC services.

The EC service server 10 comprises personal information requesting means 11 for requesting personal information to the terminal device 20 to be accessed, terminal ID requesting means 12 for requesting terminal ID information to the terminal device 20, response content deciding means 13 for deciding a response to the accessed terminal device, a personal information database 14 for storing member's personal information, and a terminal ID database 15 for storing a terminal ID and a variety of information regarding the terminal device 20 specified by the terminal ID. For the personal information requesting means 11, the terminal ID requesting means 12 and the personal information database 14 of the EC service server 10, means and a database similar to those described above with reference to the first embodiment can be used. Further, for the terminal device 20, a terminal device similar to that described above with reference to the first embodiment can be used.

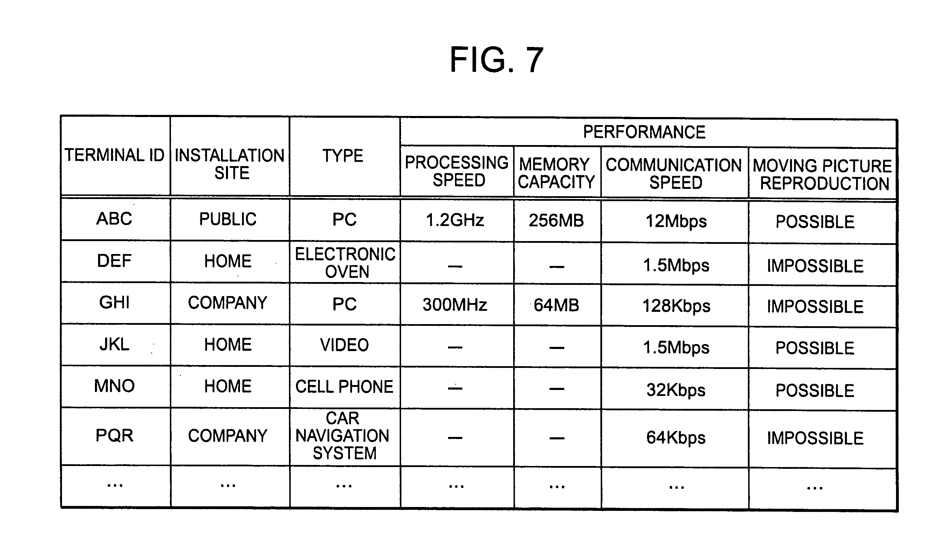

A constitution is adopted where the terminal ID database 15 stores a terminal ID table, and the response content deciding means 13 refers to the terminal ID table stored in this terminal ID database 15 to decide a response content to the terminal device 20. FIG. 7 is a schematic view showing an example of a terminal ID table in the second embodiment of the invention. The terminal ID database 15 stores, for example a terminal ID table similar to that shown in FIG. 7. In this terminal ID table, there are described a terminal ID, an installation site of the terminal device 20 having the terminal ID (in FIG. 7, simply described as installation site), a type of the terminal device 20 having the terminal ID (in FIG. 7, simply described as type), and performance of the terminal device 20 having the terminal ID (in FIG. 7, simply described as performance).

The terminal ID is, as in the case of the first embodiment, identification information solely and universally allocated to each terminal device 20, for example a MAC address or the like of the terminal device 20. As the terminal ID, as in the case of a CPU ID, identification information embedded in a ROM in the terminal can be used. Also, identification information saved in a rewritable area such as a hard disk, a memory or a security chip can be used. That is, the EC service server 10 refers to the terminal ID to identify the terminal device 20. The installation side is information to enable specification of a site where the terminal device 20 identified by the terminal ID is installed. According to the second embodiment of the invention, as shown in FIG. 7, though only three sites, i.e., a public site such as a kiosk terminal (in FIG. 7, simply described as public), a home, and a company, are shown, other installation sites can be set.

The type is information to enable specification of what type of a terminal device 20 the terminal device 20 identified by the terminal ID is. According to the second embodiment of the invention, as shown in FIG. 7, though only five types, i.e., a PC, an electronic oven, a video (moving picture reproducing device), a cell phone, and a car navigation system, are shown, other types can be set. The performance is information indicating performance of the terminal device 20 identified by the terminal ID. According to the second embodiment of the invention, as shown in FIG. 7, though only four performances, i.e., a processing speed (CPU performance), a memory capacity (data capacity to be primarily buffered), a communication speed, and possibility of moving picture reproduction, are shown, other performances can be set. Further, a variety of information regarding the terminal device 20 can be set in the terminal ID table associatively with the terminal ID.

As a method of setting a terminal ID and a variety of information regarding the terminal ID in the terminal ID table in the terminal ID database 15, there are various methods. For example, when buying the terminal device 20, the user can register, in the store side, a terminal ID, a communication speed, a type of the terminal device 20, an installation site of the terminal device 20 (main using site), and performance of the terminal device 20 to be set in the terminal ID table, whereby these bits of information can be registered in the EC service server 10 from the store side. In addition, for example, through a network, the terminal ID, the communication speed, the type of the terminal device 20, the installation site of the terminal device 20 (main using site), and the terminal performance can be registered on-line in the EC service server 10 from the terminal device 20. Further, the EC service server 10 can imagine a type of the terminal device 20, or performance of the same from the terminal ID, and measure a communication speed at transfer time of connection request information/connection permission information during connection, or by using a packet internet groper (PING).

The response content deciding means 13 obtains the terminal ID from the terminal device 20 by the terminal ID requesting means 12, and then refers to the terminal ID table in the terminal ID database 15 to decide a content of a service to the terminal device 20. Hereinafter, description is sequentially made of a case where a service content is decided in accordance with presence of an entry of a terminal ID, a case where a service content is decided in accordance with an installation site, a case where a service content is decided in accordance with a type, and a case where a service content is decided in accordance with performance.

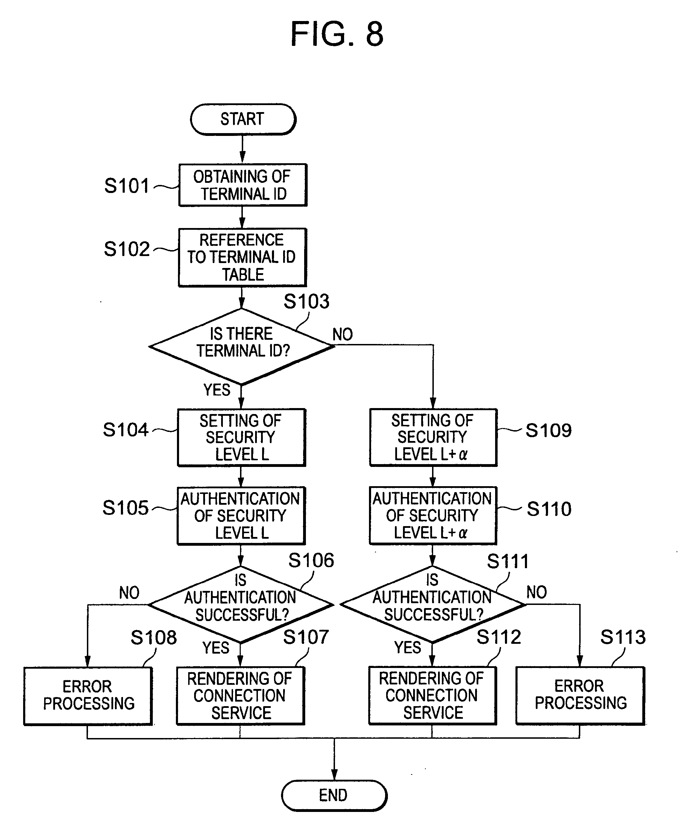

First, description is made of a case of decoding whether or not to permit connection to the terminal device 20 in accordance with presence of an entry of a terminal ID in the terminal ID table in a connection service. FIG. 8 is a flowchart showing a process for deciding whether or not to permit connection to the terminal device 20 in accordance with presence of an entry of a terminal ID in the terminal ID table in a connection service according to the second embodiment of the invention. First, a terminal ID is obtained from the terminal device 20 by the terminal ID requesting means 12 (step S101), and reference is made to the terminal ID table by the response content deciding means 13 (step S102). Then, checking is made on whether an entry of the terminal ID obtained by the terminal ID requesting means 12 is present or not in the terminal ID table (step S103).

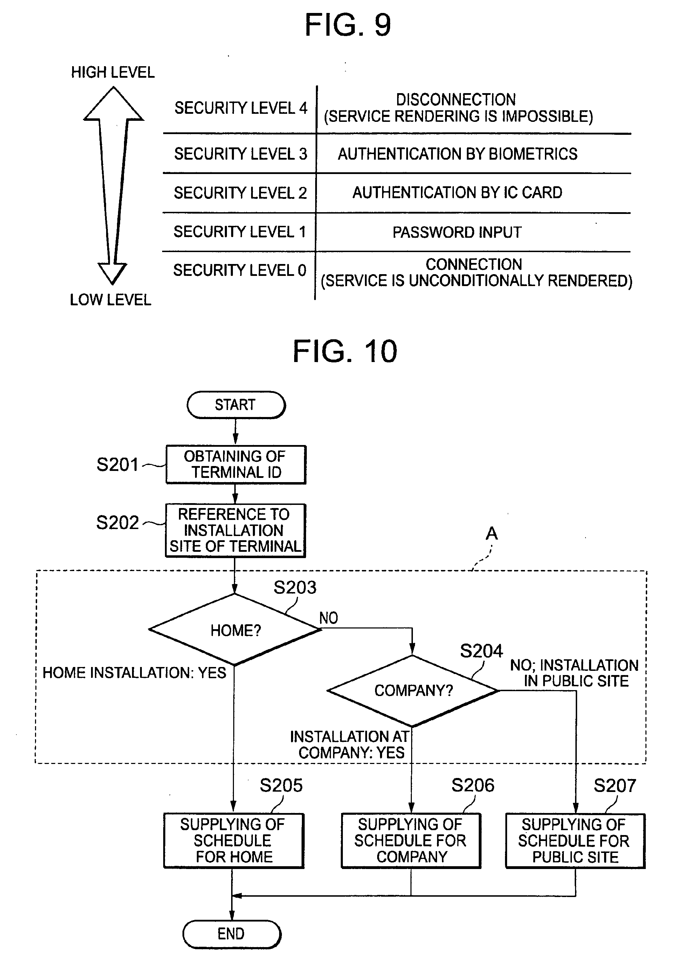

If the entry of the terminal ID obtained by the terminal ID requesting means 12 is present in the terminal ID table, a security level L is set (step S104), and the security level L is authenticated (step S105). This security level L means a degree of security of user authentication. A predetermined value is set in accordance with each user or a provided service. FIG. 9 is a schematic view illustrating security levels according to the second embodiment of the invention.

In FIG. 9, a relation among security levels 0 to 4 is schematically shown. The security level 0 defines setting for unconditionally providing services not to execute user authentication. The security level 1 defines setting for executing authentication by password input. The security level 2 defines setting for requesting reading of an IC card in the terminal device 20. The security level 3 defines setting for requesting biometrics authentication (identity authentication using a part of the body such as fingerprint authentication, iris authentication, or capillary pattern authentication) in the terminal device 20. The security level 4 defines setting for cutting-off connection without providing services. That is, when a value of a security level is increased, security is enhanced. For example, in the case of the security level 2, a security level higher than the security level 2 can be authenticated (authentication of the security level 3) in the terminal device 20. However, a security level lower than the security level 2 cannot be authenticated (authentication of the security level 1).

Then, different processing is executed in accordance with success of the authentication of the security level L (step S106). If the authentication is successful, a predetermined connection service is provided to the terminal device 20 of the terminal ID (step S107). On the other hand, if the authentication fails, error processing such as transmission of an error message is executed not to provide any connection services (step S108).

If an entry of the terminal ID obtained by the terminal ID requesting means 12 is not present in the terminal ID table, security level L+? (predetermined value ??0) is set (step S109), and the security level L+? is authenticated (step S110). Because of? ?0, the security level L+? takes a value larger than that of the security level L. Accordingly, if the same service is provided, authentication executed when there is a terminal ID in the terminal ID table becomes authentication of the security level L. On the other hand, authentication executed when there is no terminal ID in the terminal ID table becomes authentication of the security level L+?, whereby a security level can be increased when there is no terminal ID in the terminal ID table. In addition, if there is no terminal ID in the terminal ID table, services to the terminal device 20 of no terminal ID registration can be limited.

Then, different processing is executed in accordance with success of the authentication of the security level L+? (step S111). If the authentication is successful, a predetermined connection service is provided to the terminal device 20 of the terminal ID (step S112). On the other hand, if the authentication fails, error processing such as transmission of an error message is executed not to provide any connection services (step S113).

Next, description is made of a case of deciding schedule information supplied to the terminal device 20 in accordance with an installation site described in the terminal ID table in a schedule management service. FIG. 10 is a flowchart showing a process of deciding schedule information supplied to the terminal device 20 in accordance with an installation site described in the terminal ID table in a schedule management service according to the second embodiment of the invention. First, a terminal ID is obtained from the terminal device 20 by the terminal ID requesting means 12 (step S201), and reference is made to an installation site related to the terminal ID in the terminal ID table by the response content deciding means 13 (step S202). Then, determination is made as to where the terminal device 20 having the terminal ID obtained by the terminal ID requesting means 12 is installed (frame A surrounded with dotted line in FIG. 10).

For example, as in an example of the terminal ID table shown in FIG. 7, if the terminal device 20 is located at one of a home, a company and a public place, first, determination is made as to whether an installation site is a home or not (step S203). If an installation site is not a home, determination is further made as to whether an installation site is a company or not (step S204). In this way, which one of the home, the company and the public place the installation site is is determined to execute different processing for each case. In the embodiment, the determination as to where the terminal device 20 having the terminal ID obtained by the terminal ID requesting means 12 is installed (frame A) is executed in steps S203 and S204. However, other determination methods can be used.

If the installation site is a home, the EC service server 10 supplies a schedule for home to the terminal device 20 (step S205). This schedule for home enables, for example reading of all the schedules regarding the user (all the schedules, irrespective of work, hobby, and play). If the installation site is a company, the EC service server 10 supplies a schedule for company to the terminal device 20 (step S206). This schedule for company enables, for example reading of a schedule regarding work of the user. If the installation site is a public place, the EC service server 10 supplies a schedule for public to the terminal device 20 (step S207). This schedule for public enables, for example reading of a schedule which a third person is permitted to see, irrespective of a genres of work, hobby, and play. Information to be read by each of the schedules for home, company and public can be preset by the EC service server 10. Each user can also customize setting in accordance with his preference.

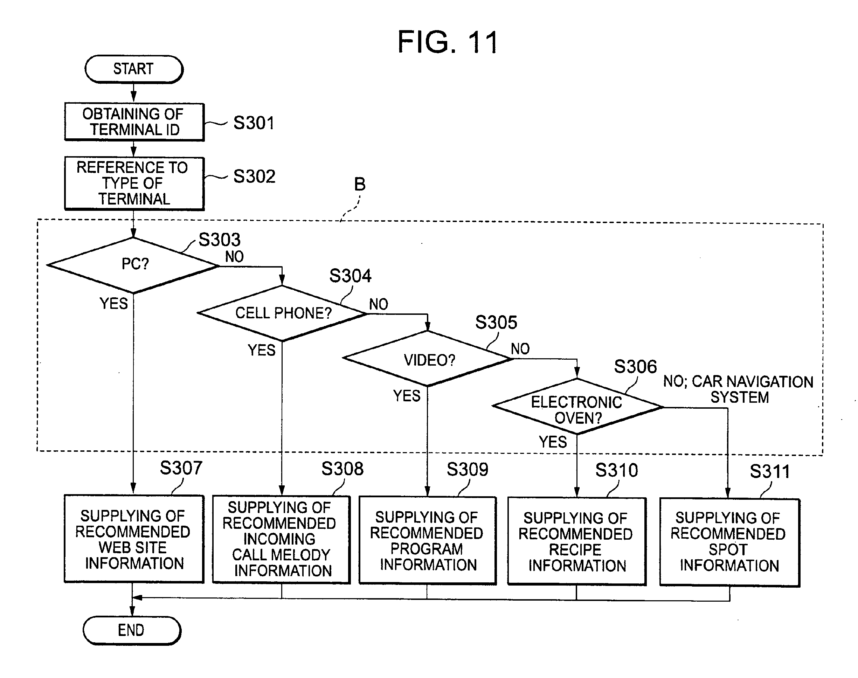

Next, description is made of a case of deciding a content of recommended information supplied to the terminal device 20 in accordance with a type described in the terminal ID table in a recommended information supplying service. FIG. 11 is a flowchart showing a process of deciding a content of recommended information supplied to the terminal device 20 in accordance with a type described in the terminal ID table in a recommended information supplying service according to the second embodiment of the invention. First, a terminal ID is obtained from the terminal device 20 by the terminal ID requesting means 12 (step S301), and reference is made to a type of a terminal related to the terminal ID in the terminal ID table by the response content deciding means 13 (step S302). Then, determination is made as to which type of a terminal device 20 the terminal device 20 having the terminal ID obtained by the terminal ID requesting means 12 is (frame B surrounded with dotted line in FIG. 11).

For example, as in an example of the terminal ID table shown in FIG. 7, if the terminal device 20 is one of a PC, a cell phone, a video, an electronic oven, and a car navigation system, first, determination is made as to whether a type is a PC or not (step S303). If a type is not a PC, determination is then made as to whether a type is a cell phone or not (step S304). If a type is not a cell phone, determination is them made as to whether a type is a video or not (step S305). If a type is not a video, determination is then made as to whether a type is an electronic oven or not (step S306). In this way, which one of the PC, the cell phone, the video, the electronic oven, and the car navigation system the type is is determined to execute different processing for each case. In the embodiment, the determination as to which type of the terminal device 20 having the terminal ID obtained by the terminal ID requesting means 12 is (frame B) is executed in steps S303 to S306. However, other determination methods can be used.

If the type is a PC, the EC service server 10 supplies recommended Web site information to the terminal device 20 (step S307). This recommended Web site information is a list of Web sites recommended by the EC service server 10 or popular Web sites. If the type is a cell phone, the EC service server 10 supplies recommended incoming call memory information to the terminal device 20 (step S308). This recommended incoming call melody information is a list of incoming call melodies (incoming call melodies for cell phone) recommended by the EC service server 10 or popular incoming call melodies. If the type is a video, the EC service server 10 supplies recommended program information to the terminal device 20 (step S309). This recommended program information is a list of programs recommended by the EC service server 10 (programs to be distributed by the EC service server) or popular programs.

If the type is an electronic oven, the EC service server 10 supplies recommended recipe information to the terminal device 20 (step S310). This recommended recipe information is a list of recipes recommended by the EC service server or a menu of popular dishes. If the type is a car navigation system, the EC service server 10 supplies recommended spot information to the terminal device 20 (step S311). This recommended spot information is a list of notable sights or regions recommended by the EC service server 10 or a list of travel plans suited to seasons.

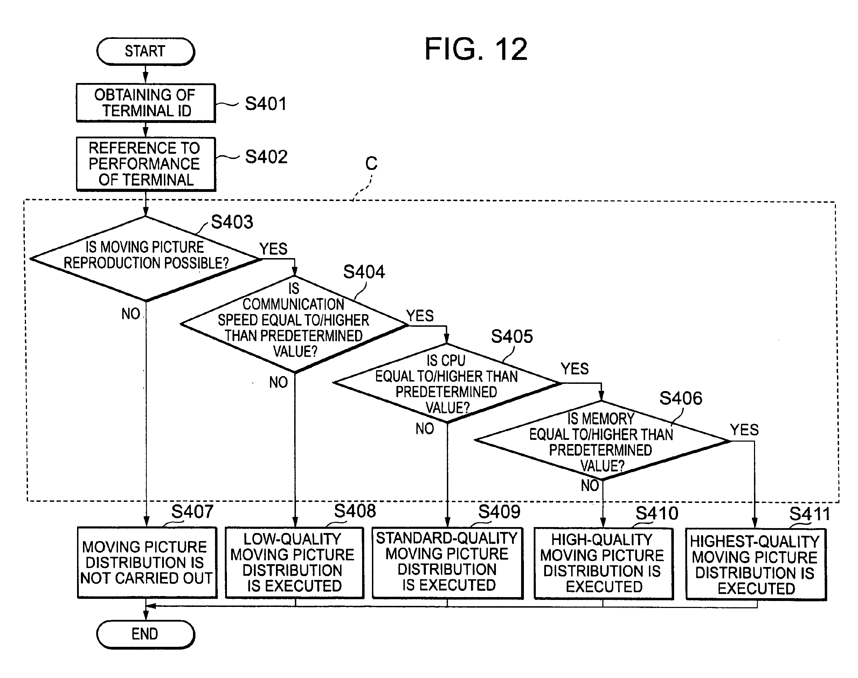

Next, description is made of a case of deciding a distribution mode of moving pictures supplied to the terminal device 20 in accordance with performance described in the terminal ID table in a moving picture distribution service. FIG. 12 is a flowchart showing a process of deciding a distribution mode of moving pictures supplied to the terminal device 20 in accordance with performance described in the terminal ID table in a moving picture distribution service according to the second embodiment of the invention. First, a terminal ID is obtained from the terminal device 20 by the terminal ID requesting means 12 (step S401), and reference is made to performance of a terminal related to the terminal ID in the terminal ID table by the response content deciding means 13 (step S402). Then, determination is made as to what performance the terminal device 20 having the terminal ID obtained by the terminal ID requesting means 12 has (frame C surrounded with dotted line in FIG. 12).

For example, as in an example of the terminal ID table shown in FIG. 7, if a communication speed, a processing speed, a memory capacity, and possibility of moving picture reproduction of the terminal device 20 are known, first, determination is made as to whether moving picture reproduction is possible or not at the terminal device 20 (step S403). If moving picture reproduction is possible, determination is then made as to whether a communication speed is equal to/higher than a predetermined value or not (step S404). If the communication speed is equal to/higher than the predetermined value, determination is then made as to whether a processing speed is equal to/higher than a predetermined value or not (s405). If the processing speed is equal to/higher than the predetermined value, determination is then made as to whether a memory capacity is equal to/higher than a predetermined value or not (step S406). In this way, whether moving picture distribution is executed or not to the terminal device 20, and what quality of moving pictures are distributed are determined to execute different processing for each case. In the embodiment, the determination as to what performance the terminal device 20 having the terminal ID obtained by the terminal ID requesting means 12 has (frame C) is executed in steps S403 to S406. However, other determination methods can be used.

Thus, no moving picture distribution is executed to a terminal device 20 of no moving picture reproducing capability (step S407). On the other hand, to a terminal device 20 capable of reproducing moving pictures, in accordance with performance of the terminal device 20, distribution of low-quality moving pictures (step S408), distribution of standard-quality moving pictures (step S409), distribution of high-quality moving pictures (step S410), and distribution of highest-quality moving pictures (step S411) are executed. Moving picture quality is defined by a bit rate, a compression rate, image resolution, and the like, and moving pictures created by using a standard of a moving pictures experts group (MPEG) 1, an MPEG 2, an MPEG 4 or the like.

In the foregoing, the reference to the presence of the entry of the terminal ID, the reference to the installation site, the reference to the type, and the reference to the performance were independently described. However, these references of information can be combined to decide a service content supplied to the terminal device 20. As an example, description is made of a case where the EC service server 10 decides each terminal device 20 and services to be provided in accordance the terminal ID obtained from the terminal device 20.
(a) Home PC: standard-quality or high-quality moving pictures are distributed in accordance with performance of the PC (moving picture distribution service)
(b) Company PC: a top page of a search site is supplied (Internet connection service)
(c) Home cell phone: telephone number list information of customers is supplied (telephone number management service)
(e) Home car navigation system (car navigation system for private car): fishing spot information and weather information of each region are supplied (fishing spot information supplying service)
(f) Company car navigation system (car navigation system for company car): map information around company (map information supplying service)

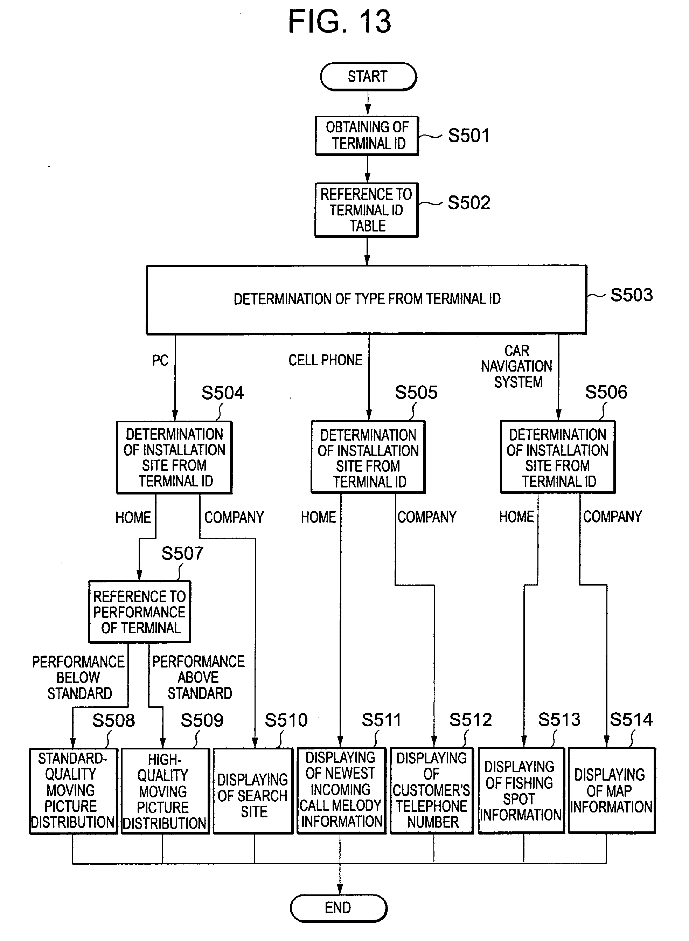

FIG. 13 is a flowchart showing a case of selectively providing services in accordance with the terminal ID according to the second embodiment of the invention. When the EC service server 10 refers to the terminal ID to selectively provide the services (a) to (f), first, a terminal ID is obtained from the terminal device 20 by the terminal ID requesting means 12 (step S501), and reference is made to each item in the terminal ID table by the response content deciding means 13 (step S502). Then, reference is made to the item of the type to determine which type of a terminal device 20 the terminal device 20 having the terminal ID obtained by the terminal ID requesting means 12 is (step S503). The processing in step S503 is executed similarly to that in the frame B surrounded with the dotted line in FIG. 11). By the process thus far, which one of a PC, a cell phone and a car navigation system the terminal device 20 is is determined.

Then, reference is made to the item of the installation site to determine where each type of the PC, the cell phone and the car navigation system is mainly used (steps S504 to S506). The processing in step S503 is executed similarly to that in the frame A surrounded with the dotted line in FIG. 10). By the process thus far, which one of a home PC, a company PC, a home cell phone, a company cell phone, a home car navigation system, and a company car navigation system the terminal device 20 is is determined.

Further, in the case of the home PC, reference is made to the item of the performance in the terminal ID table to decide distribution of standard-quality moving pictures to a PC of performance below standard, and distribution of high-quality moving pictures to a PC of performance above standard (step S507). The processing in step S507 is executed similarly to that in the frame C surrounded with the dotted line in FIG. 12.

Thus, the EC service server 10 refers to the terminal ID table based on the terminal ID obtained from the terminal device 20 to be able to execute distribution of standard-quality or high-quality moving pictures in the case of the home PC (step S508 or S509: (a)), displaying of a search site in the case of the company PC (step S510: (b)), displaying of newest incoming call melody information in the case of the home cell phone (step S511: (c)), displaying of customer's telephone number in the case of the company cell phone (step S512: (d)), displaying of fishing spot information in the case of the home car navigation system (step S513: (e)), and displaying of map information in the case of the company car navigation system (step S514: (f)).

The first and second embodiments of the present invention can be combined. That is, the EC service server 10 refers to both of the personal information database 14 and the terminal ID database 15, and decides possibility of services, and changes a service content in accordance with the member ID and the terminal ID obtained from the terminal device 20, whereby services can be effectively provided to the customer.

### Third Embodiment

Especially the combination of the member ID and the terminal ID is effective when registration of the terminal ID is checked in accordance with the member ID to change a security level. Hereinafter, description is made of a mode where response content deciding means 13 refers to a member ID table in a personal information database 14 based on a member ID obtained from a terminal device 20 by personal information requesting means 11, and a terminal ID obtained from the terminal device 20 by terminal ID requesting means 12 to decide a service content to the terminal device 20. A configuration of an EC service system is similar to that shown in FIG. 6.

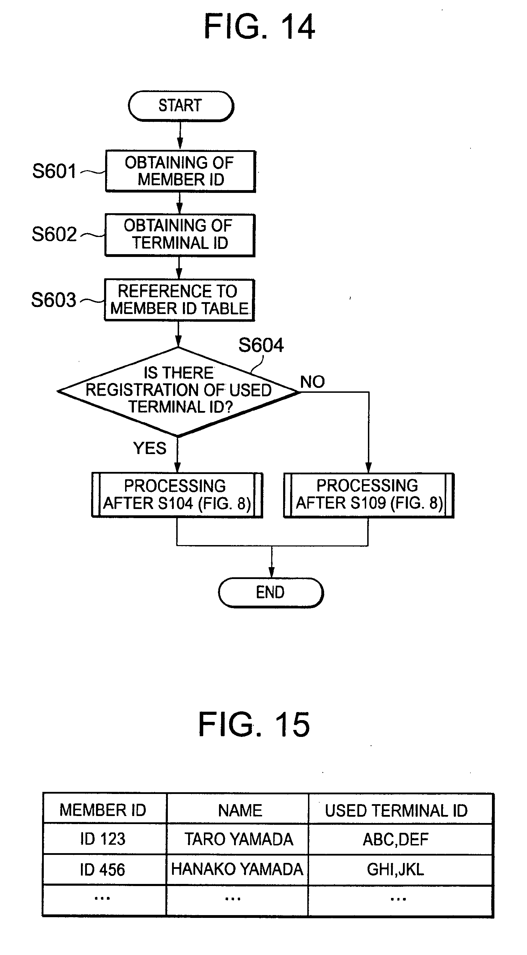

FIG. 14 is a flowchart showing a process of deciding a service content in accordance with presence of an entry of a terminal ID corresponding to a member ID in a connection service according to the third embodiment of the invention. First, a member ID is obtained as member information from the terminal device 20 by the personal information requesting means 11 (step S601). By using the member ID obtained in step S601, authentication can be executed by normal member ID+password, and setting of services to each member similar to those of the first embodiment can be executed. A terminal ID is obtained from the terminal device 20 by the terminal ID requesting means 12 (step S602). Then, reference is made to a member information table shown in FIG. 15 by the response content deciding means 13 (step S603).

FIG. 15 is a schematic view showing an example of a member ID table according to the third embodiment of the invention. The member ID table shows a relation between the member ID and the terminal ID. In FIG. 15, a member ID, a name (member name), and a used terminal ID are described in relationship to one another. The member ID is identification information allocated to identify each member, and the used terminal ID is identification information of a used terminal (terminal used when each member receives services) registered as a terminal device 20 for receiving services. That is, by referring to the member ID table, determination can be made as to whether a used identified by a member ID accesses the EC service server 10 from a predetermined terminal device 20 (main or sub-terminal of each member) or not.

Then, the response content deciding means 13 checks presence of the terminal ID obtained by the terminal ID requesting means 12 in entries of used terminal ID's described in the member ID table associatively with the member ID obtained by the personal information requesting means 11 (step S604). That is, the processing in step S604 is designed to check whether the user identified by the member ID makes access by using the terminal device 20 registered as the used terminal or not.

If the terminal ID obtained by the terminal ID requesting means 12 is present in the entries of the used terminal ID's described in member ID table associatively with the member ID obtained by the personal information requesting means 11, a process after step S104 is carried out. That is, in the case of access by the terminal device 20 registered as member's used terminal, a security level L is set. On the other hand, if the terminal ID obtained by the terminal ID requesting means 12 is not present in the entries of the terminal ID's described in the member ID table associatively with the member ID obtained by the personal information requesting means 11, a process after step S109 is carried out. That is, in the case of access not by the terminal device 20 registered as member's used terminal, a security level L+? is set to enhance security.

Thus, determination is made as to whether the member makes access by a predetermined terminal device 20 (normally used terminal device 20) or not. In the case of access not by using the predetermined terminal device 20, compared with access by the predetermined terminal 20, a security level can be increased. This is effective, for example in the following case. For example, consideration is given to a case where A normally receives a moving picture distribution service by using a living room television (terminal ID: ABC), while B normally receives a moving picture distribution service by sing his own cell phone (terminal ID: GHI), and sometimes uses a living room television (terminal ID: ABC). In this case, if a security level is set by using only the terminal ID, security levels become equal between A who daily uses the terminal and B who uses the terminal only sometimes. However, as described above, by referring to both of the member ID and the terminal ID, the EC service server 10 can determine which user uses a television, and set a normal security level for A, and a high security level for B.

As apparent from the foregoing description, in the EC service system of the present invention, the user supplies his own information (e.g., personal information intrinsic to each member such as shopping history, and information specifying a used terminal) in all the EC services, whereby the user can receive satisfactory services even at a store which he visits for the first time, and optimal services can be provided to the user.

In addition, the service provider can effectively collect personal information, prevent useless investments in digging-up of potential customers, and provide optimal services to each user.

Furthermore, the electronic commerce terminal, the electronic commerce service server, and the computer program of the present invention can realize the EC service system.

## Claims

1. An electronic commerce service system comprising:
a service server for providing electronic commerce services; and
an electronic commerce terminal for communicating with the service server through a network to receive the electronic commerce services,
wherein the electronic commerce terminal comprises personal information storing means for storing personal information containing user's shopping history, and personal information disclosing means for disclosing the personal information to the service server based on a request of the service server, and the service server comprises a personal information database for managing personal information of a user who has received the electronic commerce services in the past, personal information requesting means for requesting the electronic commerce terminal to disclose the personal information of the user, and response content deciding means for deciding a response content to the electronic commerce terminal based on the personal information disclosed by the electronic commerce terminal, and a content of the personal information database.

2. The electronic commerce service system according to claim 1, wherein the personal information disclosing means of the electronic commerce terminal also discloses personal information of the other user different from the user in that he is unrelated to use of the electronic commerce service to the service server, and the response content deciding means of the service server decides the response content based on only a content of the personal information disclosed by the electronic commerce terminal if no entry of a user corresponding to the personal information disclosed by the electronic commerce terminal is present in the personal information database.

3. The electronic commerce service system according to claim 1, wherein the electronic commerce terminal comprises terminal ID storing means for storing a terminal ID intrinsic to a terminal, and terminal ID disclosing means for disclosing the terminal ID based on a request of the service server, the service server comprises terminal ID requesting means for requesting the electronic commerce terminal to disclose the terminal ID, and the response content deciding means decides the response content based on the personal information and the terminal ID disclosed by the electronic commerce terminal, and the content of the personal information database.

4. The electronic commerce service system according to claim 3, wherein the response content deciding means of the service server includes a content referring to services received by the other user in the response content if the other user who receives the electronic commerce services by using the terminal of the same terminal ID disclosed by the electronic commerce terminal is recorded in the personal information database.

5. The electronic commerce service system according to claim 1, wherein the personal information storing means of the electronic commerce terminal contains, in the personal information, a main terminal ID which is a terminal ID of the electronic commerce terminal mainly used by the user.

6. The electronic commerce service system according to claim 3, wherein the personal information storing means of the electronic commerce terminal contains, in the personal information, a main terminal ID which is a terminal ID of the electronic commerce terminal mainly used by the user.

7. The electronic commerce service system according to claim 6, wherein the response content deciding means of the service server determines whether the terminal ID disclosed by the electronic commerce terminal coincides or not with the main terminal ID contained in the personal information disclosed by the electronic commerce terminal, and decides the response content based on a result of the determination.

8. The electronic commerce service system according to claim 6, wherein the response content deciding means of the service server determines whether the other user who receives the electronic commerce services by using the terminal of the same terminal ID disclosed by the electronic commerce terminal is recorded or not in the personal information database, and decides the response content based on a result of the determination.

9. The electronic commerce service system according to claim 3, wherein if a target of the electronic commerce services is digital data, the response content deciding means of the service server includes, in the response content, conditions for enabling reproduction of the digital data only at the terminal of the terminal ID disclosed by the electronic commerce terminal.

10. An electronic commerce service system comprising:
a service server for providing electronic commerce services; and
an electronic commerce terminal for communicating with the service server through a network to receive the electronic commerce services,
wherein the electronic commerce terminal comprises terminal ID storing means for storing a terminal ID intrinsic to a terminal, and terminal ID disclosing means for disclosing the terminal ID based on a request of the service server, and the service server comprises terminal ID requesting means for requesting the electronic commerce terminal to disclose the terminal ID, a terminal ID database for storing a terminal ID table, in which information regarding the terminal ID is described, and response content deciding means for deciding a response content to the electronic commerce terminal based on the terminal ID disclosed by the electronic commerce terminal, and a content of the terminal ID database.

11. The electronic commerce service system according to claim 10, wherein the service server comprises a personal information database for managing personal information of a user who has received the electronic commerce services in the past, and personal information requesting means for requesting the electronic commerce terminal to disclose the personal information of the user, and the response content deciding means decides the response content based on the personal information and the terminal ID disclosed by the electronic commerce terminal, a content of the personal information database, and a content of the terminal ID database.

12. The electronic commerce service system according to claim 10 or 11, wherein the response content deciding means of the service server distinguishes whether the terminal ID obtained through the terminal ID requesting means is included or not in the terminal ID table, and limits the services to the electronic commerce terminal if the terminal ID obtained through the terminal ID requesting means is not included in the terminal ID table.

13. The electronic commerce service system according to claim 10 or 11, wherein the response content deciding means of the service server distinguishes whether the terminal ID obtained through the terminal ID requesting means is included or not in the terminal ID table, and increases security in authentication of the electronic commerce terminal if the terminal ID obtained through the terminal ID requesting means is not included in the terminal ID table.

14. The electronic commerce service system according to claim 10 or 11, wherein the terminal ID table includes the terminal ID and information indicating a type of the electronic commerce terminal, and the response content deciding means of the service server distinguishes a type of the electronic commerce terminal whose terminal ID is obtained through the terminal ID requesting means, and decides the response content in accordance with the type.

15. The electronic commerce service system according to claim 10 or 11, wherein the terminal ID table includes the terminal ID and information indicating an installation site of the electronic commerce terminal, and the response content deciding means of the service server distinguishes an installation site of the electronic commerce terminal whose terminal ID is obtained through the terminal ID requesting means, and decides the response content in accordance with the installation site.

16. The electronic commerce service system according to claim 10 or 11, wherein the terminal ID table includes the terminal ID and information indicating performance of the electronic commerce terminal, and the response content deciding means of the service server distinguishes performance of the electronic commerce terminal whose terminal ID is obtained through the terminal ID requesting means, and decides the response content in accordance with the performance.

17. The electronic commerce service system according to claim 10 or 11, wherein the terminal ID table includes the terminal ID and information indicating a type, an installation site, and performance of the electronic commerce terminal, and the response content deciding means of the service server distinguishes a type, an installation site, and performance of the electronic commerce terminal whose terminal ID is obtained through the terminal ID requesting means, and decides the response content in accordance with a combination of the type, the installation site, and the performance.

18. An electronic commerce terminal for receiving electronic commerce services from a service server for providing the electronic commerce services, comprising:
personal information storing means for storing personal information containing user's shopping history; personal information disclosing means for disclosing the personal information to the service server based on a request of the service server;
terminal ID storing means for storing a terminal ID intrinsic to a terminal; and
terminal ID disclosing means for disclosing the terminal ID based on a request of the service server.

19. An electronic commerce service server for providing electronic commerce services to an electronic commerce terminal which requests the electronic commerce services, comprising:
personal information requesting means for requesting the electronic commerce terminal to disclose personal information containing user's shopping history;
terminal ID requesting means for requesting the electronic commerce terminal to disclose a terminal ID;
a personal information database for managing personal information of a user who has received the electronic commerce services in the past; and
response content deciding means for deciding a response content to the electronic commerce terminal based on the personal information and the terminal ID disclosed by the electronic commerce terminal, and the content of the personal information database.

20. An electronic commerce service server for providing electronic commerce services to an electronic commerce terminal which requests the electronic commerce services, comprising:
terminal ID requesting means for requesting the electronic commerce terminal to disclose a terminal ID;
a terminal ID database for storing a terminal ID table, in which information regarding the terminal ID is described; and
response content deciding means for deciding a response content to the electronic commerce terminal based on the terminal ID disclosed by the electronic commerce terminal, and a content of the terminal ID database.

21. A computer program for causing a computer of an electronic commerce terminal for receiving electronic commerce services from a service server for providing the electronic commerce services to function as:
personal information disclosing means for disclosing personal information containing user's sopping history based on a request of the service server; and
terminal ID disclosing means for disclosing a terminal ID intrinsic to a terminal based on a request of the service server.

22. A computer program for causing a computer of a service server for providing electronic commerce services to an electronic commerce terminal which requests the electronic commerce services to function as:
personal information requesting means for requesting the electronic commerce terminal to disclose personal information containing user's shopping history;
terminal ID requesting means for requesting the electronic commerce terminal to disclose a terminal ID; and
response content deciding means for deciding a response content to the electronic commerce terminal based on the disclosed personal information and terminal ID, and a content of a personal information database for managing personal information of a user, to whom the electronic commerce services have been provided in the past.

23. A computer program for causing a computer of a service server for providing electronic commerce services to an electronic commerce terminal which requests the electronic commerce services to function as:
terminal ID requesting means for requesting the electronic commerce terminal to disclose a terminal ID;
a terminal ID database for storing a terminal ID table, in which information regarding the terminal ID is described; and
response content deciding means for deciding a response content to the electronic commerce terminal based on the terminal ID disclosed by the electronic commerce terminal, and a content of the terminal ID database.
